# EUROPÄISCHE PATENTSCHRIFT

(11) **EP 2 958 805 B1**
(45) Veröffentlichungstag und Bekanntmachung des Hinweises auf die Patenterteilung: **19.07.2017**
(21) Anmeldenummer: 14700546.6
(22) Anmeldetag: 15.01.2014
(51) Int. Cl.: B65B 3/02, B29L 31/00, B29C 49/06, B29C 49/46, B29C 49/62, B29C 49/48

(54) **VERFAHREN UND VORRICHTUNG ZUR HERSTELLUNG UND FÜLLEN VON BEHÄLTERN**
METHOD AND DEVICE FOR PRODUCING AND FILLING CONTAINERS
PROCÉDÉ ET DISPOSITIF DE FABRICATION ET DE REMPLISSAGE DE RÉCIPIENTS

(30) Priorität: 22.02.2013 DE 102013101775
(43) Veröffentlichungstag der Anmeldung: 30.12.2015
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2014/000088
(87) Internationale Veröffentlichungsnummer: WO 2014/127876

(56) Entgegenhaltungen:
- EP-A1- 2 463 079
- DE-A1- 1 461 849
- DE-A1- 1 800 525
- DE-A1-102006 045 987
- DE-A1-102011 009 889
- GB-A- 1 017 122
- US-A- 3 913 802

## Beschreibung

Die vorliegende Erfindung betrifft ein Verfahren zur Herstellung von Behältern aus Vorformlingen sowie eine Vorrichtung hierfür.

Bekannt ist aus der DE 43 40 291 die Herstellung von Behältern durch Blasformen mit einem gas- und/oder dampfförmigen Druckmedium aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden. Typischerweise weist eine Blasmaschine eine Heizeinrichtung zum Temperieren oder Vorerhitzen (thermisches Konditionieren) der Vorformlinge sowie eine Blaseinrichtung mit wenigstens einer Blasstation auf, in deren Bereich der jeweils zuvor temperierte Vorformling biaxial oder multiaxial zu einem Behälter expandiert wird. Die Expansion erfolgt mit Hilfe eines Druckgases, z.B. mit Hilfe von Druckluft, als Druckmedium, das mit einem Formdruck in den zu expandierenden Vorformling eingeleitet wird. Der verfahrenstechnische Ablauf bei einer derartigen Expansion des Vorformlings wird in der DE 43 40 291 erläutert.

Der grundsätzliche Aufbau der Blasstation ist in der DE 42 12 583 beschrieben. Möglichkeiten der Temperierung der Vorformlinge sind in der DE 23 52 926 erläutert.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate Blasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammen zu fassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen, aus thermisch konditionierten bzw. vorerhitzten Vorformlingen herzustellen und dabei gleichzeitig mit einem flüssigen Füllgut zu füllen, welches als hydraulisches Druckmedium zum Ausformen des Behälters durch Expandieren oder durch radiales und axiales Strecken oder Recken des Vorformlings mit einem Form- und Fülldruck zugeführt wird, sodass zeitgleich mit dem Füllen der jeweilige Vorformling in den Behälter verformt wird. So ein Verfahren ist von GB 1017122 bekannt.

Beim hydraulischen Formen und Füllen eines Behälters aus einem Vorformling in einem Arbeitsgang muss der Behälter zwingend vollständig gefüllt werden, um vollständig ausgeformt zu werden. Vor dem Verschließen des Behälters muss deshalb ein Kopfraum geschaffen werden, der frei von Füllgut ist. Wird die Formung des Behälters durch eine von innen auf den Boden des Vorformlings einwirkende Reckstange unterstützt, die nach der Formung und Füllung aus dem gefüllten Behälter entfernt wird, kann das von der Reckstange verdrängte Volumen nach der Entfernung der Reckstange den Kopfraum bilden.

Zwischenzeitlich sind Verfahren entwickelt worden, um den Vorformling während der Formung auf andere Weise ohne Einsatz einer Reckstange zu führen, wodurch die Kopfraumbildung ebenfalls auf andere Weise geschehen muss.

Aufgabe der Erfindung ist es, ein Verfahren sowie eine Vorrichtung zur Herstellung von mit einem flüssigen Füllgut gefüllten Behältern vorzuschlagen, die die Bildung eines Kopfraums bei gefülltem Behälter ermöglichen.

Zur Lösung dieser Aufgabe wird ein Verfahren zur Herstellung von mit einem flüssigen Füllgut gefüllten Behältern aus Vorformlingen vorgeschlagen, wobei der Vorformling während einer Form- und Füllphase geformt und der sich formende Behälter annähernd vollständig mit Füllgut gefüllt wird, und das dadurch gekennzeichnet ist, dass zur Ausbildung eines Kopfraums ein vorgegebenes Füllgutvolumen unter Druckeinwirkung auf das Füllgut durch eine in den Behälter eingeführte Entnahmeleitung aus dem Behälter entfernt wird.

Weiter wird eine Vorrichtung zur Herstellung von mit einem flüssigen Füllgut gefüllten Behältern aus Vorformlingen mit wenigstens einer Formstation vorgeschlagen, die zumindest eine einen Formraum bildende Form sowie zumindest einen Formkopf aufweist, über den zum Umformen des jeweiligen Vorformlings in einen Behälter in den Innenraum des mit seiner Öffnung in Dichtlage gegen den Formkopf anliegenden Vorformling ein flüssiges Druckmedium als Füllgut durch eine Zufuhrleitung eingebracht werden kann. Die Vorrichtung ist erfindungsgemäß dadurch gekennzeichnet, dass sie eine Entnahmeleitung zum Entfernen eines vorgegebenen Volumens des nach der Formung im Behälter befindlichen flüssigen Füllguts aufweist, deren eines Ende sich im Innenraum des Behälters befindet. Weiter weist die Vorrichtung Mittel zum Aufbauen eines Druckes, nämlich von Gasdruck, auf das Füllgut auf.

Bei dem erfindungsgemäßen Verfahren wird ein Behälter in bekannter und im Stand der Technik ausführlich beschriebener Weise in einem Arbeitsgang aus einem Vorformling geformt und gefüllt. Der nach dem Füllvorgang randvoll oder annähernd randvoll gefüllte Behälter muss dann vor dem Verschließen um ein vorgegebenes Volumen entleert werden, damit sich unter dem Verschluss ein Kopfraum bildet.

Erfindungsgemäß wird zum Entfernen des vorgegebenen Füllgutvolumens zur Herstellung des Kopfraums Druck auf das Füllgut ausgeübt. Das zu entfernende Flüssigkeitsvolumen kann dann durch die Entnahmeleitung aus dem Behälter entfernt werden. Durch den Druck wird das Füllgut durch die Leitung, deren eines Ende sich innerhalb des Behälters befindet, aus dem Behälter herausgedrückt. Erfindungsgemäß wird die Druckeinwirkung durch Gasdruck erreicht. Hierfür kann insbesondere ein inertes Gas oder Gasgemisch, wie z.B. ein Inertgas enthaltend oder bestehend aus CO₂ oder N₂ verwendet werden.

Um aus dem geformten Behälter ein definiertes Volumen des Füllguts zu entfernen, kann das Volumen des entfernten Füllguts gemessen werden, insbesondere mit einem magnetisch induktiven Durchflussmesser (MID). Vorzugsweise kann mit ein und demselben Durchflussmesser sowohl die dem Behälter zufließende Füllgutmenge, wie auch die aus dem Kopfraum verdrängte, vom Behälter abfließende Füllgutmenge gemessen werden. Hierfür ist insbesondere ein MID geeignet.

Vorteilhaft kann die Entnahme des Füllguts durch die Zufuhrleitung erfolgen. Üblicherweise erfolgt die Zuführung des Füllguts zur Formung und Füllung des Behälters aus dem Vorformling durch eine Zufuhrleitung, die im Innenraum des ursprünglichen Vorformlings endet. Durch Druckeinwirkung auf das Füllgut außerhalb der Zufuhrleitung entsteht ein Überdruck, durch den das Füllgut zurück in die Zuleitung gedrückt und auf diesem Wege aus dem Behälter entfernt werden kann. Besonders vorteilhaft an diesem Ausführungsbeispiel ist, dass das aus dem Behälter entfernte Füllgut zurück in den Füllguttank geführt werden und im nächsten Füll- und Formvorgang unmittelbar wieder verwendet werden kann.

Zur Herstellung eines definierten Kopfraums kann die Entnahmeleitung so im Behälter angeordnet werden, dass der höchste Punkt ihrer Öffnung im Wesentlichen dem angestrebten Füllgutniveau im Behälter nach Bildung des Kopfraums entspricht. Eine Öffnung in diesem Sinne kann z.B. die höchste Öffnung der Füllgutzuführung, mit der der Vorformling und der sich formende Behälter durch mehrere Öffnungen befüllt wird, sofern das Kopfraumvolumen durch die Zufuhrleitung entfernt wird. Eine Öffnung kann aber auch das untere Ende einer Entnahmeleitung sein, die bis zum gewünschten Füllgutniveau nach Kopfraumbildung in den Behälter eingebracht wird.

Auf diesem Wege wird erreicht, dass bei Druckeinwirkung auf das Füllgut soviel Füllgut durch die Entnahmeleitung abgeführt wird, bis das Füllgutniveau im Behälter die Oberkante der Öffnung der Entnahmeleitung erreicht. Bei weiterer Druckeinwirkung pflanzt sich der Druck nicht mehr in die Entnahmeleitung fort und es wird kein weiteres Füllgut mehr aus dem Behälter entfernt. Bei der Verwendung von Gasdruck fließt bei Erreichen des Niveaus der Öffnung Druckgas durch die Entnahmeleitung. Zweckmäßig wird die Druckeinwirkung auf eine Zeitdauer begrenzt, die gerade ausreicht, um die gewünschte Füllgutmenge durch die Entnahmeleitung zu entfernen. Der Gasverbrauch wird so wirksam begrenzt. Es können auch Mittel in der Entnahmeleitung vorgesehen sein, die ermitteln, ob Flüssigkeit oder Gas abgeführt wird, und den Vorgang beenden, sobald Gas abgeführt wird.

Alternativ kann ein vorgegebenes rückzuführendes Flüssigkeitsvolumen erfasst werden, bspw. von einem Durchflussmessgerät (z.B. MID), welches ein entsprechendes Steuersignale an die Gasquelle bzw. -förderaggregate leitet und den Gasverbrauch zu regeln oder zu steuern. Hierbei kann eine gewisse Gasförderung weg vom Kopfraum am Ende der Kopfraumbildungsphase zugelassen werden, um ein Nachtropfen oder ein sich Entleeren der Entnahmeleitung bei der finalen Druckentlastung zu verhindern.

Bei einer verbesserten Version dieses Verfahrenes wird daher vor oder während des Füll- und Formvorgangs die Entnahmeleitung gezielt gefüllt, bspw. in indem eine Teilmenge des Füllgutes durch diese Leitung in den Vorformling bzw. zu formenden Behälter geleitet wird. Somit wird sichergestellt, dass das nicht eingeschlossene Gasvolumina von dem rückzuführenden Flüssigkeitsvolumen in der Entnahmeleitung mitgerissen und die Messwerte des Durchflussmessgerätes somit verfälscht werden.

Es kann auch das Füllgutniveau im Behälter gemessen werden, z.B. durch eine elektrische Sonde, die vorteilhaft in der Form integriert sein kann. Insbesondere kann gemessen werden, ob ein vorgegebenes Niveau erreicht ist. Sobald dieses Niveau erreicht ist, kann der Vorgang der Kopfraumbildung beendet werden.

Zur Kopfraumbildung muss ein Überdruck auf das Füllgut ausgeübt werden, um ein Füllgutvolumen aus dem Behälter zu verdrängen. Sofern der Formdruck von bspw. bis zu 16 bar aufrecht erhalten wird, muss der auf das Füllgut ausgeübte Druck entsprechend höher sein. Hierbei stellt sich das Problem, dass ein weiter erhöhter Druck auch dazu führt, dass sich das zur Verdrängung vorgesehene Gas im Füllgut teilweise lösen würde. Daher wird das Füllgut nach der Formung und Füllung des Behälters und vor der Kopfraumbildung zunächst zumindest teilweise auf 4 bis 10 bar, vorzugsweise im Bereich von 4 bis 7 bar entlastet, abhängig u.a. von der Fülltemperatur und der gewünschten CO2-Konzentration im Füllgut. Durch diesen derart geringeren Druck wird weniger Gas im Füllgut gelöst und der Vorgang der Füllgutverdrängung aus dem Kopfraum kann wirtschaftlich günstiger erfolgen.

Bei der erfindungsgemäßen Vorrichtung umfassen die Mittel zum Aufbauen eines Drucks vorzugsweise einen Inertgasspeicher, insbesondere gefüllt mit einem Inertgas enthaltend oder bestehend aus CO₂ oder N₂. Dadurch kann das Druckgas keinen negativen Einfluss auf die Haltbarkeit des Füllguts haben. Insbesondere bei carbonisierten Getränken als Füllgut bietet sich CO₂ als Druckgas an, damit sich auch unter Druckeinwirkung keine dem Füllgut fremden Gase im Füllgut lösen.

Die Entnahmeleitung der erfindungsgemäßen Vorrichtung ist mit einem Durchflussmesser, insbesondere einem magnetisch induktiven Durchflussmesser (MID), versehen damit das dem ausgeformten Behälter zur Bildung eines Kopfraums entnommene Flüssigkeitsvolumen gemessen und genau das vorgegebene Volumen aus dem Behälter entfernt werden kann.

Vorteilhaft endet das zweite Ende der Entnahmeleitung in einem Füllgutspeicher. Das dem Behälter entnommene Füllgut kann so gesammelt und dem Füllgut wieder zugeschlagen werden.

Gemäß einem besonders bevorzugten Ausführungsbeispiel der Vorrichtung nach der Erfindung wird als Entnahmeleitung die Zufuhrleitung verwendet. So kann aus dem geformten Behälter abgeführtes Füllgut direkt in den Füllgutspeicher zurückgeführt und bei den nachfolgenden Form- und Füllvorgängen unmittelbar weiterverwendet werden.

Vorteilhaft kann die Entnahmeleitung eine Öffnung aufweisen, deren höchster Punkt dem Füllgutniveau im Behälter nach Bildung des Kopfraums entspricht. Eine Öffnung in diesem Sinne kann z.B. die höchste Öffnung der Füllgutzuführung sein, mit der der Vorformling und der sich formende Behälter durch mehrere Öffnungen befüllt wird, sofern das Kopfraumvolumen durch die Zufuhrleitung entfernt wird. Eine Öffnung kann aber auch das untere Ende einer Entnahmeleitung sein, die bis zum gewünschten Füllgutniveau nach Kopfraumbildung in den Behälter eingebracht wird.

Gemäß einem Ausführungsbeispiel der Erfindung kann die Vorrichtung Mittel zum Messen des Füllgutniveaus im Behälter aufweisen, insbesondere Mittel zum Messen, ob ein vorgegebenes Niveau erreicht ist, vorzugsweise eine elektrische Sonde, die in die Form integriert sein kann. So kann festgestellt werden, wann das gewünschte Füllgutniveau im Behälter erreicht und der Kopfraum hergestellt ist. Der Vorgang kann dann beendet und der Behälter verschlossen werden.

Der anhand einer einzelnen Formstation geschilderte Form- und Füllvorgang erfolgt in der Praxis auf Maschinen, auf denen in engem Zeittakt eine Vielzahl von Formstationen eine Vielzahl von Behältern formen und befüllen. Hierfür ist es vorteilhaft, wenn mindestens eine Gruppe von Formköpfen gemeinsam mit einem gemeinsamen Mittel zum Aufbauen eines Gasdrucks in Verbindung steht, und insbesondere, wenn die Formköpfe mit einem einzigen Mittel zum Aufbauen eines Gasdrucks leitungsmäßig verbunden sind. Das Mittel zum Aufbauen eines Gasdrucks kann insbesondere als ein oder mehrere Ringkessel oder als Ringrohre ausgebildet sein.

Die Erfindung wird im Folgenden anhand der beigefügten Figur an einem Ausführungsbeispiel näher erläutert:

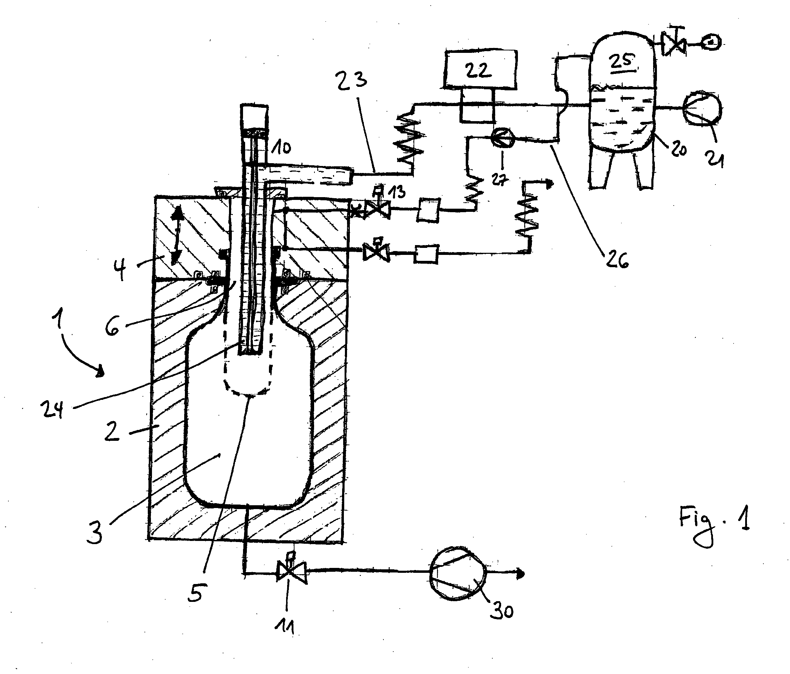

**Fig. 1** zeigt in schematischer Darstellung eine erfindungsgemäße Anlage zur Herstellung von mit einem flüssigen Füllgut gefüllten Behältern aus Vorformlingen.

Die in **Fig. 1** dargestellte Anlage verfügt über wenigstens eine Form- und Füllstation **1**, die jeweils zumindest eine einen Formraum **3** bildende Form **2** aufweist. Die Form **2** wird durch einen Formkopf **4** nach oben abgeschlossen. Ein in der Figur gestrichelt dargestellter Vorformling **5** kann in die Form eingebracht werden und liegt mit seiner Öffnung **6** in Dichtlage gegen den Formkopf **4** an.

Der Formkopf **4** ist über eine Zuleitung **23** mit einem Speicher **20** für ein flüssiges Füllgut verbunden, in dem das Füllgut durch eine Hochdruckpumpe **21** unter hohem Druck steht und dem Vorformling **5** über ein Ventil **10** zugeführt werden kann. Die Zuleitung endet in einer Füllgutzuführung **24**, die in den Innenraum des Vorformlings **5** mündet. Das zugeführte Volumen kann dabei über einen magnetisch induktiven Durchflussmesser (MID) **22** gemessen werden. Das Füllgut befindet sich im Speicher **20** unter einer Inertgasatmosphäre **25**, die im dargestellten Ausführungsbeispiel aus CO₂ besteht.

Die Herstellung eines mit einem flüssigen Füllgut gefüllten Behälters gemäß dem erfindungsgemäßen Verfahren erfolgt in der nachstehend beschriebenen Weise: Zunächst wird der Vorformling **5** in die geöffnete Form **2** eingebracht und der Formkopf **4** geschlossen, so dass die Öffnung **6** des Vorformlings **5** dichtend mit dem Formkopf **4** in Anlage gerät. Der Vorformling ist dabei thermisch konditioniert, was z.B. dadurch erreicht werden kann, dass der Vorformling vor dem Einbringen in die Form eine in der Figur nicht dargestellte Heizstrecke durchläuft.

Der Vorformling kann bei Bedarf zunächst in geeigneter Weise auf die anschließende Formung und Füllung vorbereitet werden, z.B. durch Sterilisation, Spülung mit Inertgas, Vakuumierung etc.

Die Form- und Füllphase wird durch Öffnen des Ventils **10** eingeleitet, wodurch Füllgut aus dem Füllgutspeicher **20** unter dem durch die Hockdruckpumpe **21** erzeugten hohen Druck in den Vorformling **5** eingebracht wird. Der Vorformling wird durch das einströmende Füllgut innerhalb der Form zum Behälter umgeformt und gleichzeitig gefüllt. Die Umformung kann durch die Beaufschlagung des Formraums **3** mit von der Vakuumpumpe **30** erzeugtem Unterdruck unterstützt werden, wozu Ventil **11** geöffnet wird.

Der ausgeformte Behälter ist nach Abschluss des Füllvorgangs randvoll gefüllt. Vor dem Verschließen muss ein Kopfraum durch Entfernung eines Volumens des Füllguts hergestellt werden. Hierfür ist der Füllgutspeicher **20** im Bereich seiner Inertgasatmosphäre über eine Leitung **26** mit dem Formkopf **4** so verbunden, dass eine Kommunikation zwischen dem Füllgutspeicher **20** und der Mündung **6** des geformten Behälters hergestellt werden kann, im dargestellten Beispiel durch Öffnung des Ventils **13**. In der Leitung **26** ist eine zweite Hochdruckpumpe **27** angeordnet, die einen höheren Druck als den Fülldruck erzeugt. Durch Öffnung des Ventils **13** kann damit ein höherer Druck als der Fülldruck auf das Füllgut gegeben werden. Das im Behälter befindliche Füllgut wird durch die Zuleitung **23** in den Füllgutspeicher **20** zurückgedrückt.

Das aus dem Behälter herausgedrückte Füllgutvolumen wird durch den Durchflussmesser **22** gemessen. Die Ventile **10** und **13** werden entsprechend bei Erreichen des zur Kopfraumbildung erforderlichen Volumens geschlossen und der Behälter kann in bekannter Weise entlastet und verschlossen werden. Es hat sich als besonders vorteilhaft herausgestellt, dass insbesondere mit dem magnetisch induktiven Durchflussmesser (MID) sowohl die dem Behälter zufließende Füllgutmenge, wie auch die aus dem Kopfraum verdrängte Füllgutmenge, d.h. die vom Behälter wegfließende Füllgutmenge, gemessen wird. Hierzu kann ein und derselbe MID genutzt werden.

Die Füllgutentnahme bis zu einem vorgegebenen Niveau kann auch dadurch erreicht werden, dass an der Füllgutzuführung **24** oder an einer anderen für die Füllgutentnahme geeigneten Leitung eine Öffnung angeordnet ist, deren Oberkante der gewünschten Füllguthöhe im Behälter nach Schaffung des Kopfraums entspricht. Solange die Öffnung sich vollständig innerhalb des Füllguts befindet, wird Füllgut durch die Leitung **23** aus dem Behälter entfernt. Sinkt das Füllgutniveau bis unterhalb der Oberkante der Öffnung ab, so wird kein weiteres Füllgut mehr in die Leitung gedrückt sondern nur Druckgas. Der gewünschte Füllstand ist erreicht und der Behälter kann in bekannter Weise entlastet und verschlossen werden.

Es versteht sich von selbst, dass die hier schematisch dargestellte Anlage über mehrere Form- und Füllstationen **1** verfügen kann, an denen simultan oder zeitlich geringfügig versetzt eine Vielzahl von Behältern gleichzeitig geformt werden kann.

### Bezugszeichenliste

- 1: Form- und Füllstation
- 2: Form
- 3: Formraum
- 4: Formkopf
- 5: Vorformling
- 6: Öffnung des Vorformlings
- 10: Ventil für Füllgutzufuhr
- 11: Ventil für Vakuumpumpe
- 13: Ventil Inertgasspeicher
- 20: Speicher für Füllgut
- 21: Hochdruckpumpe
- 22: Magnetisch induktiver Durchflussmesser (MID)
- 23: Zuleitung für Füllgut
- 24: Füllgutzuführung
- 25: Inertgasatmosphäre
- 26: Leitung
- 27: Hochdruckpumpe
- 30: Vakuumpumpe

## Patentansprüche

1. Verfahren zur Herstellung von mit einem flüssigen Füllgut gefüllten Behältern aus Vorformlingen (5), wobei der Vorformling (5) während einer Form- und Füllphase geformt und der sich formende Behälter annähernd vollständig mit Füllgut gefüllt wird, wobei zur Ausbildung eines Kopfraums ein vorgegebenes Füllgutvolumen unter Druckeinwirkung auf das Füllgut durch eine in den Behälter eingeführte Entnahmeleitung (24) aus dem Behälter entfernt wird,
**dadurch gekennzeichnet, dass** die Druckeinwirkung durch Gasdruck erreicht wird, indem mindestens zeitweise ein Gas in den Kopfraum eingeleitet wird, und wobei das Füllgut vor der Druckeinwirkung zur Kopfraumbildung mittels eines Gases zumindest teilweise vom Form- und Fülldruck auf 4 bis 10 bar, vorzugsweise auf 4 bis 7 bar, entlastet wird.

2. Verfahren nach Anspruch 1, **dadurch gekennzeichnet, dass** als Gas ein inertes Gas oder Gasgemisch, insbesondere ein Inertgas enthaltend oder bestehend aus CO₂ oder N₂ verwendet wird.

3. Verfahren nach einem der Ansprüche 1 oder 2, **dadurch gekennzeichnet, dass** das Füllgutvolumen durch einen Durchflussmesser (22), insbesondere einen magnetisch induktiven Durchflussmesser (MID), gemessen wird, wobei insbesondere mit dem Durchflussmesser sowohl die dem Behälter zufließende Füllgutmenge, wie auch die aus dem Kopfraum verdrängte, vom Behälter wegfließende Füllgutmenge, gemessen wird.

4. Verfahren nach einem der Ansprüche 1 bis 3, **dadurch gekennzeichnet, dass** die Entfernung des Füllguts durch die Zufuhrleitung (23) erfolgt.

5. Verfahren nach einem der Ansprüche 1 bis 4, **dadurch gekennzeichnet, dass** die Entnahmeleitung eine Öffnung aufweist, deren höchster Punkt dem Füllgutniveau im Behälter nach Bildung des Kopfraums entspricht.

6. Verfahren nach einem der Ansprüche 1 bis 5, **dadurch gekennzeichnet, dass** das Füllgutniveau im Behälter gemessen wird, insbesondere das Erreichen eines vorgegebenen Niveaus, vorzugsweise durch eine elektrische Sonde.

7. Vorrichtung zur Herstellung von mit einem flüssigen Füllgut gefüllten Behältern aus Vorformlingen (5) mit wenigstens einer Formstation (1), die zumindest eine einen Formraum (3) bildende Form (2) sowie zumindest einen Formkopf (4) aufweist, über den zum Umformen des jeweiligen Vorformlings (5) in einen Behälter in den Innenraum des mit seiner Öffnung (6) in Dichtlage gegen den Formkopf (4) anliegenden Vorformling (5) ein flüssiges Druckmedium als Füllgut durch eine Zufuhrleitung (23) eingebracht werden kann,
**dadurch gekennzeichnet, dass** die Vorrichtung eine Entnahmeleitung zum Entfernen eines vorgegebenen Volumens des nach der Formung im Behälter befindlichen flüssigen Füllguts, deren eines Ende sich im Innenraum des Behälters befindet, und Mittel zum Aufbauen eines Druckes (27), nämlich von Gasdruck, auf das Füllgut aufweist, und wobei die Entnahmeleitung einen Durchflussmesser (22) aufweist.

8. Vorrichtung nach Anspruch 7, **dadurch gekennzeichnet, dass** die Mittel zum Aufbauen eines Drucks einen Inertgasspeicher (25), insbesondere gefüllt mit einem Inertgas enthaltend oder bestehend aus CO₂ oder N₂, umfasst.

9. Vorrichtung nach Anspruch 7 oder 8, **dadurch gekennzeichnet, dass** die der Durchflussmesser (22) ein magnetisch induktiver Durchflussmesser (MID) ist.

10. Vorrichtung nach einem der Ansprüche 7 bis 9, **dadurch gekennzeichnet, dass** das zweite Ende der Entnahmeleitung in einem Füllgutspeicher (20) endet.

11. Vorrichtung nach einem der Ansprüche 7 bis 10, **dadurch gekennzeichnet, dass** als Entnahmeleitung die Zufuhrleitung (23) verwendet wird.

12. Vorrichtung nach einem der Ansprüche 7 bis 11, **dadurch gekennzeichnet, dass** die Entnahmeleitung eine Öffnung aufweist, deren höchster Punkt dem Füllgutniveau im Behälter nach Bildung des Kopfraums entspricht.

13. Vorrichtung nach einem der Ansprüche 7 bis 12, **dadurch gekennzeichnet, dass** mindestens eine Gruppe von Formköpfen (4) gemeinsam mit einem gemeinsamen Mittel zum Aufbauen eines Gasdrucks in Verbindung stehen, insbesondere, dass alle Formköpfe (4) mit einem einzigen Mittel zum Aufbauen eines Gasdrucks leitungsmäßig verbunden sind.

14. Vorrichtung nach einem der Ansprüche 7 bis 13, **dadurch gekennzeichnet, dass** als Mittel zum Aufbauen eines Gasdrucks ein oder mehrere Ringkessel oder Ringrohre ausgebildet sind.

15. Vorrichtung nach einem der Ansprüche 7 bis 14, **dadurch gekennzeichnet, dass** die Vorrichtung Mittel zum Messen des Füllgutniveaus im Behälter aufweist, insbesondere Mittel zum Messen, ob ein vorgegebenes Niveau erreicht ist, vorzugsweise eine elektrische Sonde.

## Claims

1. Method for producing containers from preforms (5), said containers being filled with liquid contents, wherein the preform (5) is formed during a form- and-fill phase, and the container is almost completely filled with the contents as it is being filled, wherein, to create a headspace, a predefined volume of the contents is removed from the container by the action of pressure on the said contents by means of a removal line (24) that is introduced into the container,
**characterised in that** the pressure action is attained by gas pressure, **in that** a gas is introduced into the headspace at least from time to time, and wherein, before the pressure action for forming the headspace, the filling contents is pressure-balanced by means of a gas, at least partially at form- and-filling pressure, at 4 to 10 bar, and preferably at 4 to 7 bar.

2. Method according to claim 1, **characterised in that**, as the gas, an inert gas or gas mixture is used, in particular an inert gas or gas mixture, in particular an inert gas containing or consisting of CO₂ or N₂.

3. Method according to any one of claims 1 or 2, **characterised in that** the filling product volume is measured by a flow meter (22), in particular a magnetically inductive flow meter (MID), wherein, in particular, with the flow meter both the filling product quantity flowing to the container is measured, as well as the filling product quantity flowing out of the container, forced out of the headspace.

4. Method according to any one of claims 1 to 3, **characterised in that** the removal of the filling product takes place via the delivery line (23).

5. Method according to any one of claims 1 to 4, **characterised in that** the removal line exhibits an opening, the highest point of which corresponds to the filling product level in the container after the formation of the headspace

6. Method according to any one of claims 1 to 5, **characterised in that** the filling product level in the container is measured, in particular the attaining of a predefined level, preferably by means of an electric probe.

7. Device for producing containers filled with a liquid filling product from preforms (5) with at least one forming station (1), comprising at least one mould (2) forming a mould space (3), as well as at least one forming head (4), by means of which, to turn the respective preform (5) into a container, a liquid pressure medium as the filling product can be introduced into the interior of the preform (5), located with its opening (6) in a sealing position in contact against the forming head (4), through a delivery line (23),
**characterised in that** the device comprises a removal line for the removal of a predefined volume of the liquid filling product present in the container after forming, one end of the said line being in the interior of the container, and means for building up a pressure (27), namely gas pressure, onto the filling product, and wherein the removal line comprises a flow meter (22).

8. Device according to claim 7, **characterised in that** the means for building up a pressure comprises an inert gas store (25), in particular filled with an inert gas containing or consisting of CO₂ or N₂.

9. Device according to claim 7 or 8, **characterised in that** the flow meter (22) is a magnetically inductive flow meter (MID).

10. Device according to any one of claims 7 to 9, **characterised in that** the second end of the removal line ends in a filling product store (20).

11. Device according to any one of claims 7 to 10, **characterised in that** the delivery line (23) is used as a removal line.

12. Device according to any one of claims 7 to 11, **characterised in that** the removal line comprises an opening, the highest point of which corresponds to the filling product level in the container after the formation of the headspace.

13. Device according to any one of claims 7 to 12, **characterised in that** at least one group of forming heads (4) are in connection in common with common means for building up a gas pressure, in particular that all the forming heads (4) are connected by means of lines to a single means for building up a gas pressure.

14. Device according to any one of claims 7 to 13, **characterised in that** one or a plurality of ring containers or ring pipes are configured as means for building up a gas pressure.

15. Device according to any one of claims 7 to 14, **characterised in that** the device comprises means for measuring the filling product level in the container, in particular means for measuring whether a predefined level has been reached, preferably an electric probe.

## Revendications

1. Procédé servant à fabriquer des contenants, remplis d'un produit de remplissage liquide, à partir de préformes (5), dans lequel la préforme (5) est moulée au cours d'une phase de moulage et de remplissage et le contenant en cours de formation est rempli approximativement totalement de produit de remplissage, dans lequel afin de réaliser un espace de tête, un volume de produit de remplissage spécifié est retiré du contenant sous l'effet d'une pression exercée sur le produit de remplissage par un conduit de prélèvement (24) introduit dans le contenant,
**caractérisé en ce que** l'effet de pression est atteint par pression de gaz **en ce qu'**un gaz est acheminé au moins par intermittence dans l'espace de tête, et dans lequel le produit de remplissage est déchargé avant l'effet de pression afin de former l'espace de tête au moyen d'un gaz au moins en partie de la pression de moulage et de remplissage à 4 à 10 bar, de préférence à 4 à 7 bar.

2. Procédé selon la revendication 1, **caractérisé en ce qu'**un gaz inerte ou un mélange de gaz inertes, en particulier un gaz inerte contenant ou constitué de CO₂ ou de N₂ est utilisé en tant que gaz.

3. Procédé selon l'une quelconque des revendications 1 ou 2, **caractérisé en ce que** le volume de produit de remplissage est mesuré par un débitmètre (22), en particulier par un débitmètre à induction magnétique (DIM), dans lequel aussi bien la quantité de produit de remplissage affluant vers le contenant qu'également la quantité de produit de remplissage refoulée hors de l'espace de tête, s'éloignant du contenant sont mesurées en particulier avec le débitmètre.

4. Procédé selon l'une quelconque des revendications 1 à 3, **caractérisé en ce que** le retrait du produit de remplissage est effectué par le conduit d'amenée (23).

5. Procédé selon l'une quelconque des revendications 1 à 4, **caractérisé en ce que** le conduit de prélèvement présente une ouverture, dont le point le plus élevé correspond au niveau de produit de remplissage dans le contenant après la formation de l'espace de tête.

6. Procédé selon l'une quelconque des revendications 1 à 5, **caractérisé en ce que** le niveau de produit de remplissage est mesuré dans le contenant, en particulier l'atteinte d'un niveau spécifié, de préférence par une sonde électrique.

7. Dispositif servant à fabriquer des contenants, remplis d'un produit de remplissage liquide, à partir de préformes (5), avec au moins un poste de moulage (1), qui présente au moins un moule (2) formant un espace de moulage (3) ainsi qu'au moins une tête de moulage (4), par l'intermédiaire de laquelle un milieu sous pression liquide peut être introduit en tant que produit de remplissage par un conduit d'amenée (23) afin de mettre en forme ladite préforme (5) en un contenant dans l'espace intérieur de la préforme (5) reposant par son ouverture (6) dans une position étanche contre la tête de moulage (4),
**caractérisé en ce que** le dispositif présente un conduit de prélèvement servant à retirer un volume spécifié du produit de remplissage liquide se trouvant après le moulage dans le contenant, une extrémité du conduit de prélèvement se trouvant dans l'espace intérieur du contenant, et des moyens servant à établir une pression (27), à savoir une pression de gaz, sur le produit de remplissage, et dans lequel le conduit de prélèvement présente un débitmètre (22).

8. Dispositif selon la revendication 7, **caractérisé en ce que** les moyens servant à établir une pression comprennent un accumulateur de gaz inerte (25), en particulier rempli d'un gaz inerte contenant ou constitué de CO₂ et de N₂.

9. Dispositif selon la revendication 7 ou 8, **caractérisé en ce que** le débitmètre (22) est un débitmètre à induction magnétique (DIM).

10. Dispositif selon l'une quelconque des revendications 7 à 9, **caractérisé en ce que** la seconde extrémité du conduit de prélèvement se termine dans un accumulateur de produit de remplissage (20).

11. Dispositif selon l'une quelconque des revendications 7 à 10, **caractérisé en ce que** le conduit d'amenée (23) est utilisé en tant que conduit de prélèvement.

12. Dispositif selon l'une quelconque des revendications 7 à 11, **caractérisé en ce que** le conduit de prélèvement présente une ouverture, dont le point le plus haut correspond au niveau de produit de remplissage dans le contenant après la formation de l'espace de tête.

13. Dispositif selon l'une quelconque des revendications 7 à 12, **caractérisé en ce qu'**au moins un groupe de têtes de moulage (4) sont reliées conjointement à un moyen commun servant à établir une pression de gaz, en particulier **en ce que** toutes les têtes de moulage (4) sont reliées par un conduit à un unique moyen servant à établir une pression de gaz.

14. Dispositif selon l'une quelconque des revendications 7 à 13, **caractérisé en ce qu'**un ou plusieurs bassins annulaires ou tuyaux annulaires sont réalisés en tant que moyens servant à établir une pression de gaz.

15. Dispositif selon l'une quelconque des revendications 7 à 14, **caractérisé en ce que** le dispositif présente des moyens servant à mesurer le niveau de produit de remplissage dans le contenant, en particulier des moyens servant à mesurer si un niveau spécifié est atteint, de préférence une sonde électrique.
